# EUROPÄISCHE PATENTSCHRIFT

(11) **EP 0 337 132 B1**
(45) Veröffentlichungstag und Bekanntmachung des Hinweises auf die Patenterteilung: **16.06.1993**
(21) Anmeldenummer: 89104477.8
(22) Anmeldetag: 14.03.1989
(51) Int. Cl.: B65G 53/42

(54) **Vorrichtung zum Zuführen eines pulverförmigen Materials zu einer Versorgungseinrichtung**
Device for feeding powdery material to a supply arrangement
Dispositif pour amener des matières pulvérulentes à un dispositif de distribution

(30) Priorität: 09.08.1988 DE 3827014; 14.04.1988 DE 3812466
(43) Veröffentlichungstag der Anmeldung: 18.10.1989
(73) Patentinhaber: Krämer, Erich, 96247 Michelau (DE)
(72) Erfinder: Krämer, Erich, 96247 Michelau (DE)
(74) Vertreter: Liesegang, Roland, Dr.-Ing.

(56) Entgegenhaltungen:
- DE-A- 2 424 009
- DE-A- 2 800 853
- Soviet Inventions Illustrated, Derwent Publications Ltd. , Sektion Mechanik, Woche B33, Zusammenfassung Nr. 15869, L02, 27. September 1979 & SU-A-631063 (FUJI PAUDAL) 15. Dezember 1978

## Beschreibung

Die Erfindung bezieht sich auf eine Vorrichtung zum Entnehmen von Beschichtungspulver aus einem Transportbehälter und Weiterfördern des Pulvers zu einer elektrostatischen Pulver-Beschichtungsanlage gemäß dem Oberbegriff des Patentanspruchs 1. Eine solche Vorrichtung ist aus der EP-A-0 184 994 bekannt.

Bisher wird meist das vom Hersteller in einem Karton, der das pulverförmige Material in einem Pulversack enthält, angelieferte pulverförmige Material aus dem Sack in einen Pulverbehälter einer Pulver-Beschichtungseinrichtung beispielsweise geschüttet. Dieser Pulverbehälter ist so beschaffen, daß das eingefüllte Pulver mittels eines Fluides, wie Luft, und einer Fluidisiereinrichtung in dem Pulverbehälter in den Schwebezustand gebracht wird. Über eine hiervon gesonderte Injektoreinrichtung wird dann das so mit Hilfe der Fluidisiereinrichtung in den Schwebezustand gebrachte pulverförmige Material zu der Pulver-Beschichtungseinrichtung gefördert. Beim Pulverwechsel muß der Pulverbehälter beispielsweise durch Ausblasen vollständig gereinigt werden, um Vermischungen mit dem neuen zu verwendenden Pulver zu vermeiden. Ferner wird die im Pulverbehälter befindliche Restpulvermenge beim Farbwechsel oftmals weggeworfen, so daß bisher immer eine beträchtliche Abfallmenge beim Pulverwechsel in Kauf genommen werden mußte.

Aus der eingangs erwähnten EP-A-0 184 994 ist zwar bereits eine Pulverabsaugvorrichtung zum Absaugen von Pulver für das elektrostatische Beschichten aus Behältern wie Fässer, Säcke, Kisten etc. bekannt, die ein Saugrohr aufweist, an dessen Ende mehrere mit Druckluft beaufschlagte, feinporige Endstücke, nämlich Druckluft-Schalldämpfer, angeordnet sind, mit welchen das Pulver im Bereich der Ansaugstelle am Ende des Saugrohres fluidisiert wird, wobei der Behälter auf einem Vibrator stehend angeordnet ist. Die Fluidisierwirkung dieser Vorrichtung ist jedoch vergleichsweise gering, und durch das Vibrieren der Pulvermasse kann es zu deren Verfestigung kommen, was das Eindringen der Vorrichtung in die Pulvermasse erschwert.

Die Erfindung zielt daher darauf ab, unter Überwindung der zuvor geschilderten Schwierigkeiten eine Vorrichtung zum Entnehmen von Beschichtungspulver aus einem Transportbehälter und Weiterfördern des Pulvers zu einer elektrostatischen Pulverbeschichtungsanlage bereitzustellen, bei der umständliche Reinigungsarbeiten beim Farbwechsel oder Pulverwechsel entfallen und das Restpulver wieder verwendet werden kann, wobei große Pulverabfallmengen wirksam vermieden werden. Die Lösung dieser Aufgabe ergibt sich aus dem Patentanspruch 1.

Erfindungsgemäß dient ferner als Pulverbehältnis das Transportbehältnis für das pulverförmige Material, und die Fluidisiereinrichtung taucht in das pulverförmige Material im Transportbehältnis ein. Durch die erfindungsgemäße Auslegung der Vorrichtung wird direkt das Transportbehältnis, das das Pulver enthält, zum Zuführen des pulverförmigen Materials zu einer Versorgungseinrichtung, z.B. einer Pulver-Beschichtungseinrichtung, genutzt, so daß bisher benötigte aufwendige Vorrichtungen und Anlagen hierfür entfallen. Auch entfallen zugleich hiermit sämtliche Reinigungsarbeiten bei einem Pulverwechsel, die bisher vorgenommen werden mußten, wenn man gesonderte Pulverbehälter zum Zuführen des pulverförmigen Materials hatte.

Durch die Fluidisierringe wird eine gute Fluidisierung des Pulvers im Bereich der Ansaugstelle erreicht, und die in der Pulvermasse vibrierenden Fluidisierringe lockern das Pulver auf und dringen deshalb leicht in die Pulvermasse ein.

Die Fluidisiereinrichtung kann hängend angeordnet werden, wobei sie sich selbsttätig, beispielsweise aufgrund ihres Eigengewichts, in das pulverförmige Material im Pulvertransportbehältnis hineinbewegen kann. Sie kann aber auch auf das Pulver aufgesetzt werden.

Die Erfindung wird nachstehend an einem Beispiel unter Bezugnahme auf die beigefügten Zeichnungen näher erläutert.
Es zeigen:
Fig. 1 eine schematische Ansicht einer erfindungsgemäßen Vorrichtung.
Fig. 2, 3 zeigen schematisch die erfindungsgemäße Vorrichtung, die mit einem Vibrator versehen ist zur Verbesserung der Förderung des pulverförm igen Materials.

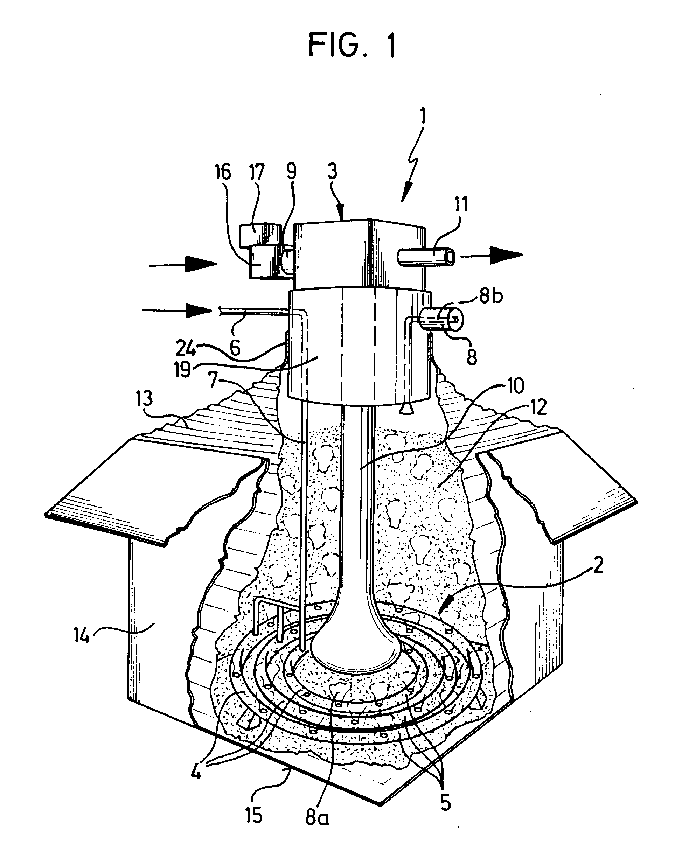

Die Vorrichtung zum Zuführen des pulverförmigen Materials ist in der Fig. 1 insgesamt mit 1 bezeichnet. Diese Vorrichtung umfaßt eine insgesamt mit 2 bezeichnete Fluidisiereinrichtung und eine Abführeinrichtung in Form einer Injektoreinrichtung 3. Beim dargestellten Beispiel bilden die Fluidisiereinrichtung 2 und die Injektoreinrichtung 3 eine Einheit, die gemeinsam gehandhabt werden kann. Die Fluidisiereinrichtung umfaßt mehrere Fluidisierelemente, die beim dargestellten Beispiel als Fluidisierringe 5 ausgebildet sind. Natürlich können diese Fluidisierelemente 4 auch in anderer Form, beispielsweise viereckig, oval, rautenförmig 0.dgl. sowie Kombinationen hiervon ausgelegt werden. Die Fluidisierelemente 4 bzw. die Fluidisierringe 5 können radial hintereinander in einer Ebene oder in verschiedenen Höhen angeordnet sein. Mit 6 ist ein Einlaß für ein Fluid, wie Luft 1 bezeichnet, der mit den Fluidisierelementen 4 der Fluidisiereinrichtung 2 über eine schematisch angedeutete Leitung 7 in Verbindung steht. Die aus den Fluidisierelementen 4 austretende Luft 8a wird über einen Auslaß 8 abgeführt und an die Umgebungsluft über einen nachgeschalteten Feinfilter abgegeben. Durch die Abführung wird ein Überdruck im Transportbehältnis vermieden.

Die Injektoreinrichtung 3 hat einen Drucklufteintritt 9, der über die Injektoreinrichtung 3 mit dem Innenraum einer Saugeinrichtung in Form eines Saugrohres 10 in Verbindung steht. Auf der Auslaßseite der Injektoreinrichtung 3 ist schematisch ein Auslaß 11 angedeutet, über den das auffluidisierte Pulver zu einer nicht näher dargestellten Pulver-Beschichtungseinrichtung gefördert wird. Wie ferner in der Figur gezeigt ist, kann dem Einlaßbereich der Injektoreinrichtung 3 ein Ventil 16 mit einem zugeordneten Zeitgeber 17 vorgeschaltet sein, so daß die Vorrichtung 1 auch als Zudosiereinrichtung bei einer automatisch arbeitenden Pulverbeschichtungsanlage verwendet werden kann.

Die Anordnung, bestehend aus Injektoreinrichtung 3 und Saugrohr 10 ist zweckmäßigerweise relativ zu der Fluidisiereinrichtung 2 verstellbar, so daß das untere freie Ende des Saugrohrs entsprechend den Verhältnissen auf günstigste Weise bezüglich der Wirkung und der Lage der Fluidisiereinrichtung 2 eingestellt werden kann.

Die Vorrichtung 1 mit der Fluidisiereinrichtung 2 und der Injektoreinrichtung 3 ist in das mit 12 bezeichnete pulverförmige Material eingetaucht, das sich in einem Sack 13 befindet, der in einen Karton 14 eingelegt ist. In dieser Form wird das Pulver vom Hersteller als Verpackungsgebinde geliefert, und der Sack 13 mit dem Karton 14 bildet das Pulvertransportbehältnis. Wie schematisch in der Figur dargestellt ist, sind zweckmäßigerweise Teile der Fluidisiereinrichtung 2 bzw. der Fluidisierelemente 4 so ausgebildet, daß sie Stellfüße bilden, die auf dem Boden 15 des Transportbehältnisses 13 und 14 in der Endlage aufliegen, so daß die insgesamt mit 1 bezeichnete Vorrichtung nach dar Erfindung zuverlässig auf dem Boden 15 steht. Obgleich nicht dargestellt ist, kann die Fluidisiereinrichtung 2 mit den Fluidisierelementen 4 auch hängend angeordnet werden.

Mit Hilfe der vorstehend beschriebenen Vorrichtung 1 wird das nachstehend näher beschriebene Verfahren zum Zuführen eines pulverförmigen Materials zu einer Versorgungseinrichtung näher erläutert.

Die Baueinheit aus Fluidisiereinrichtung 2 und der Injektoreinrichtung 3 wird nach dem Öffnen des Kartons 14 und dem Öffnen des Sacks 13 in das im Sack 13 befindliche pulverförmige Material 12 in der Zeichnung von oben nach unten eingeführt. Während dieses Einführens wird Fluidluft in die Fluidisierungseinrichtung 2 eingeleitet, so daß das Pulver im Sack 13 aufgelockert und hochgewirbelt wird, wodurch sich das Einführen der Vorrichtung 1 in das Transportbehältnis erleichtert. Gegebenenfalls kann die Vorrichtung 1 mechanisch ohne Verwendung von Fluidluft in das pulverförmige Material 12 im Sack 13 eingetaucht werden. Wenn die Vorrichtung 1 ihre Endlage erreicht hat und beispielsweise die fußförmig ausgebildeten Teile der Fluidisierelemente 4 auf dem Boden 15 stehen können, wird das pulverförmige Material mit Hilfe der Fluidisierelemente 4 und der darüber austretenden Fluidluft 8a in den Schwebezustand im Sack 13 gebracht. Das obere offene Ende des Sacks 13 ist dicht schließend an der Baueinheit aus Fluidisiereinrichtung 2 und Injektoreinrichtung 3 angebracht. Das so mit Hilfe der Fluidisiereinrichtung 2 in den Schwebezustand gebrachte oder auffluidisierte pulverförmige Material 12 wird über das Saugrohr 10 in Verbindung mit der Injektoreinrichtung 3 abgezogen und in Form eines Pulver-Luft-Gemisches über die Ablaßleitung 11 zu der nachgeschalteten Pulver-Beschichtungseinrichtung gefördert. Hierbei wird das auffluidisierte pulverförmige Material vom Querschnittsbereich des Transportbehältnisses in unmittelbarer Nähe der Fluidisiereinrichtung 2 abgesaugt. Die Fluidiserelemente 4 bringen das pulverförmige Material 12 entsprechend ihrer Form flächenhaft entsprechend der speziell dargestellten Ausführungsform in den Schwebezustand, wobei sich dann das mit Hilfe der Fluidisiereinrichtung 2 auf fluidisierte pulverförmige Material 12 aufgrund der Saugwirkung zum Eintritt des Saugrohrs 10 bewegt. Obgleich nicht dargestellt, kann die Fluidisiereinrichtung 12 über ihre Fluidisierelemente 4 das pulverförmig Material 12 punktuell in den Schwebezustand bringen.

Wenn nun beispielsweise ein Farbwechsel in der Gesamtanlage vorgenommen werden soll, wird nur die erfindungsgemäße Vorrichtung 1 aus dem Sack 13 mit dem darin befindlichen pulverförmigen Material 12 herausgezogen, wobei die Fluidisiereinrichtung 2 und die Injektoreinrichtung 3 abgeschaltet sind. Nach der Entnahme der Vorrichtung 1 aus dem Sack 13 kann dann der Sack 13 an seinem oberen Ende wieder verschlossen werden und zusammen mit dem Karton 14 weggetragen werden. Wenn man zu einem späteren Zeitpunkt wiederum das gleiche pulverförmige Material benötigt, so bringt man den Karton 14 mit dem darin befindlichen Sack 13 mit dem sauberen Pulver wiederum zum Einsatzort, und die Vorrichtung 1 nach der Erfindung wird dann wiederum auf die vorstehend beschriebene Weise in das pulverförmige Material 12 im Sack 13 eingeführt. Somit kann die beim Farbwechsel beispielsweise auftretende Abfallmenge nennenswert reduziert werden und insbesondere entfallen sämtliche Reinigungsarbeiten, die man bisher bei gesondert vorgesehenen Pulverbehältern benötigte.

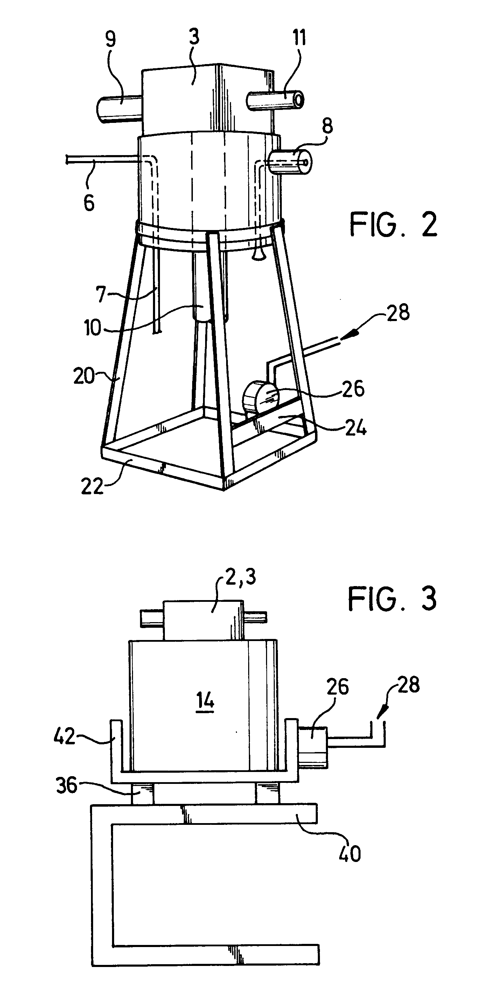

Im Betrieb der Vorrichtung nach Fig. 1 hat sich gezeigt, daß bei einigen Pulversorten das Pulver nicht vollständig fluidisiert und von der Abführeinrichtung 3 abgeführt wird. Gemäß der in Fig. 2 dargestellten Ausführung der erfindungsgemäßen Vorrichtung ist daher die Abführeinrichtung 3 mit Füßen 20 versehen, die an ihren unteren Enden zweckmäßigerweise durch Schienen oder ein Band 22 aus Blech miteinander verbunden sind. Im Bereich der unteren Enden der Füße 22 ist ein Vibrator 26 angebaut, z.B. direkt an dem Band 22, oder, wie in Fig. 3 dargestellt, an einer Schiene 24, die an zweien der Füße 20 befestigt ist. Der Vibrator 26 ist an der Schiene 24 befestigt, beispielsweise angeschraubt. Der Vibrator 26, der mit Anschlußleitungen 28 versehen ist, kann ein elektrisch betriebener Vibrator sein, oder ein Schwingmotor, beispielsweise ein Kugelumlaufmotor, der pneumatisch betrieben und handelsüblich käuflich ist.

Es hat sich im Betrieb gezeigt, daß durch die Verwendung eines Vibrators die erfindungsgemäße Vorrichtung nach dem Aufsetzen auf das zu fördernde pulverförmige Material schnell und zügig nach unten wandert und auch die letzten Reste des pulverförmigen Materials von der Fluidisiereinrichtung aufgewirbelt und von der Abführeinrichtung erfaßt und zu der nicht-gezeigten Pulverbeschichtungskabine transportiert werden.

Fig. 3 zeigt eine andere Ausführungsform mit einem Vibrator 26, wobei hier der Pulverbehälter 40, d.h. der Karton, in welchem das Pulver angeliefert wird, auf ein Gestell aufgesetzt wird, an dem der Vibrator 26 befestigt ist.

Bei der Ausführungsform nach Fig. 3 ist das Gestell zweiteilig und besteht aus einem unteren Teil 40, dem eigentlichen Gestell und einem oberen Teil 42, der in der dargestellten Ausführungsform in Form eines flachen, schaltenförmigen Behälters ausgebildet ist, in den der Pulverbehälter 14 eingesetzt ist. Anstelle eines schalenförmigen Behälters kann der obere Teil 42 auch nur als ebene Platte ausgebildet sein, wobei dann Vorsorge zu treffen ist, daß der Pulverbehälter 14 nicht von der Platte herabfallen oder herabrutschen kann. Die beiden Teile 40, 42 des Gestells sind durch handelsübliche Schwinglager 36 miteinander verbunden, und der Vibrator 26 ist am oberen Teil 42 des Gestells befestigt. Bei Betätigung des Vibrators 26 wird somit der obere Teil 42 des Gestells und damit der auf ihm angeordnete Pulverbehälter 14 in Schwingungen versetzt.

Beim Eintauchen der erfindungsgemäßen Fluidisiervorrichtung 2, 3 in den Karton oder Pulverbehälter 14 hat es sich gezeigt, daß die Fluidisiereinrichtung 2, 3 manchmal aus der Vertikalen auswandert. Um dies zu vermeiden, kann eine Führungseinrichtung vorgesehen werden, z. B. eine vertikale Führungsschiene, längs der die Fluidisiereinrichtung verschiebbar ist.

Die Fluidisiereinrichtung kann von oben nach unten in den Sack bzw. den Transportbehälter eingeführt werden, sie kann aber auch ortsfest installiert sein, wobei dann der Transportbehälter mit dem Sack z. B. auf einen Tisch aufgesetzt wird, der von unten nach oben auf die Fluidisiereinrichtung zu bewegt wird, so daß auch hier die Fluidisiereinrichtung in das Pulver im Transportbehälter zwangsläufig eintaucht.

## Patentansprüche

1. Vorrichtung zum Entnehmen von Beschichtungspulver (12) aus einem Transportbehälter (13, 14) und Weiterfördern des Pulvers zu einer elektrostatischen Pulver-Beschichtungsanlage mit einer Abführeinrichtung (3, 10, 11), bestehend aus einer Saugvorrichtung (3), die einerseits mit dem einen Ende eines Saugrohrs (10), dessen anderes Ende in das im Transportbehälter (13, 14) befindliche Pulver (12) einführbar ist, und andererseits mit einer zur Beschichtungsanlage führenden Auslaßleitung (11) verbunden ist, mit einer ebenfalls in das im Transportbehälter (13, 14) befindliche Pulver (12) einführbaren Fluidisiereinrichtung (2), die an eine Druckluft-Zuführleitung (6) angeschlossen ist, und mit einem Vibrator (26), dadurch gekennzeichnet, daß die Fluidisiereinrichtung (2) aus mehreren, radial im Abstand angeordneten Fluidisierringen (5) besteht und daß die Abführeinrichtung (3, 10, 11), deren Saugvorrichtung als Injektor (3) ausgebildet ist, und die Fluidisiereinrichtung (2), an welcher der Vibrator (26) angebracht ist, eine Baueinheit bilden.

2. Vorrichtung nach Anspruch 1, dadurch gekennzeichnet, daß die Ebenen der zueinander konzentrisch angeordneten Fluidisierringe (5) in unterschiedlichen Niveaus liegen.

3. Vorrichtung nach Anspruch 1 oder 2, dadurch gekennzeichnet, daß die Abführeinrichtung (3, 10, 11) relativ zur Fluidisiereinrichtung (2) verstellbar ist.

4. Vorrichtung nach einem der Ansprüche 1 bis 3, dadurch gekennzeichnet, daß der Druck der der Fluidisiereinrichtung (2) zugeführten Druckluft 0,2 bis 1,0 bar beträgt.

## Claims

1. Apparatus for removing coating powder (12) from a container (13, 14) and conveying the powder onward to an electrostatic powder coating facility, comprising a discharge device (3, 10, 11) consisting of a suction unit (3) connected, on the one hand, to one end of a suction pipe (10) whose other end can be introduced into the powder (12) in the container (13, 14) and, on the other hand, to an outlet line (11) leading to the coating facility, and with a fluidising device (2) which can likewise be introduced into the powder (12) in the container (13 14) and which is connected to a compressed air supply line (6), and with a vibrator (26), characterised in that the fluidising device (2) consists of a plurality of fluidising rings (5) spaced radially apart and that the discharge device (3, 10, 11), the suction device of which is in the form of an injector (3), and the fluidising device (2), on which the vibrator (26) is mounted, constitute one unit.

2. Apparatus according to claim 1, characterised in that the planes of the concentrically facing fluidising rings (5) lie at different levels.

3. Apparatus according to claim 1 or 2, characterised in that the discharge device (3, 10, 11) is adjustable relative to the fluidising device (2).

4. Apparatus according to any of claims 1 to 3, characterised in that the pressure of the compressed air supplied to the fluidising device (2) is between 0.2 and 1.0 bar.

## Revendications

1. Dispositif de prélèvement dans une charge pulvérulente (12) et de transfert de la poudre à une installation de chargement électrostatique de poudre, avec un dispositif d'évacuation (3, 10, 11), composé d'un dispositif aspirant (3), qui peut, d'une part, être introduit, par une extrémité d'un tube aspirant (10), dont l'autre extrémité se trouve dans le récipient de transport (13, 14), et d'autre part être relié à une conduite d'évacuation (11) mettant à l'installation de chargement, avec un dispositif de fluidisation (2) qui peut être introduit également dans la poudre (12) se trouvant dans le récipient de transport (13, 14), et raccordé à une conduite d'amenée d'air comprimé (6), et avec un vibreur (26), caractérisé en ce que le dispositif de fluidisation (2) est composé de plusieurs anneaux de fluidisation (5), disposés radialement à distance, et en ce que le dispositif d'évacuation (3, 10, 11), dont le dispositif d'aspiration est réalisé sous forme d'injecteur (3), et le dispositif de fluidisation (2), sur lequel est monté le vibreur (26), forment un ensemble de construction.

2. Dispositif selon la revendication 1, caractérisé en ce que les plans des anneaux de fluidisation (5) disposés concentriquement les uns par rapport aux autres se situent à des niveaux différents.

3. Dispositif selon la revendication 1 ou 2, caractérisé en ce le dispositif d'évacuation (3, 10, 11), est réglable par rapport au dispositif de fluidisation (2).

4. Dispositif selon l'une des revendications 1 à 3, caractérisé en ce que la pression de l'air comprimé amené au dispositif de fluidisation est de 0,2 à 1 bar.
